# EUROPÄISCHE PATENTANMELDUNG

(11) **EP 1 677 200 A2**
(43) Veröffentlichungstag der Anmeldung: **05.07.2006**
(21) Anmeldenummer: 05090362.4
(22) Anmeldetag: 28.12.2005
(51) Int. Cl.: G06F 12/02, G06F 12/08

(54) **Verfahren und Anordnung zum Manipulieren des Inhalts eines Datenspeichers**

(30) Priorität: 29.12.2004 DE 102004063757
(71) Anmelder: Francotyp-Postalia GmbH, 16547 Birkenwerder (DE)
(72) Erfinder: Müller, Ralf, 13355 Berlin (DE)
(74) Vertreter: Karlhuber, Mathias

(57) **Zusammenfassung**

Verfahren zum Manipulieren des Inhalts eines Datenspeichers, bei dem eine mit dem Datenspeicher (5) verbindbare Verarbeitungseinrichtung (3) in wenigstens einem Manipulationsschritt (8.5) wenigstens einen zu manipulierenden ersten Speicherbereich (5.1) des Datenspeichers (5) manipuliert, wobei die Verarbeitungseinrichtung (3) einen Überwachungsbereich (5.2) des ersten Speicherbereichs (5.1) überwacht, aus dessen Zustandsverlauf der Abschluss der Manipulation des ersten Speicherbereichs (5.1) erkennbar ist, wobei eine Verarbeitungseinrichtung (3) mit einem Zwischenspeicher (3.1) verwendet wird, in den Daten aus dem Datenspeicher (5) gelesen werden, wobei ein Teilbereich des Datenspeichers (5) als erster Ausschlussbereich des Datenspeichers (5) festlegbar ist, der nicht in den Zwischenspeicher (3.1) gelesen wird, und wobei in einem dem Manipulationsschritt (8.5) vorangehenden Festlegungsschritt (8.4) der erste Ausschlussbereich derart festgelegt wird, dass er den Überwachungsbereich (5.2) umfasst.

## Beschreibung

Die vorliegende Erfindung betrifft ein Verfahren zum Manipulieren des Inhalts eines Datenspeichers, bei dem eine mit dem Datenspeicher verbindbare Verarbeitungseinrichtung in wenigstens einem Manipulationsschritt wenigstens einen zu manipulierenden ersten Speicherbereich des Datenspeichers manipuliert, wobei die Verarbeitungseinrichtung einen Überwachungsbereich des ersten Speicherbereichs überwacht, aus dessen Zustandsverlauf der Abschluss der Manipulation des ersten Speicherbereichs erkennbar ist. Sie betriff weiterhin eine entsprechende Anordnung, die sich zur Durchführung des erfindungsgemäßen Verfahrens eignet.

Bei mobilen oder besonders klein bauenden Anwendungen finden häufig so genannte Festkörperspeicher, wie z. B. so genannte Flash-Speicher, Anwendung. Diese Flash-Speicher haben den Vorteil, dass sie ein nichtflüchtiger Speicher sind, der wie ein flüchtiger Arbeitsspeicher, beispielsweise ein RAM-Modul, frei adressierbar ist.

Herkömmliche Flash-Speicher sind in eine Reihe von Sektoren aufgeteilt, die gegebenenfalls unterschiedliche Größe haben können. Während ein unbeschriebener Flash-Speicher in der Regel zwar Byte-weise beschrieben werden kann, muss beim Löschen jeweils immer der gesamte Sektor gelöscht werden. Zudem kann ein bereits beschriebener Flash-Speicher nicht Byte-weise wiederbeschrieben werden. Es muss daher beim Wiederbeschreiben eines solchen Flash-Speichers zunächst der gesamte betroffene Sektor gelöscht werden, bevor er wieder beschrieben werden kann.

Soll ein Flash-Speicher manipuliert, also beispielsweise gelöscht oder beschrieben werden, kann der Abschluss der Manipulation anhand des Zustands so genannter Togglebits des betroffenen Sektors festgestellt werden. Während der Manipulation springt der Zustand des betreffenden Togglebit kontinuierlich hin und her. Nimmt das betreffende Togglebit einen zeitlich stabilen Zustand an, ist die Manipulation abgeschlossen.

Wird zur Manipulation des Flash-Speichers eine Verarbeitungseinrichtung in Form eines herkömmlichen Prozessors mit einem so genannten Cache-Speicher als Zwischenspeicher verwendet, in den der Inhalt des zu manipulierenden betreffenden Sektors in der Regel eingelesen würde, so muss dieser Cache-Speicher bei der Manipulation des betreffenden Sektors in der Regel abgeschaltet werden. Nur so kann das Togglebit des betreffenden Sektors zur Überwachung tatsächlich aus dem Flash-Speicher und nicht aus dem Cache-Speicher gelesen und damit der Abschluss der Manipulation festgestellt werden. Dies hat allerdings den Nachteil, dass der Cache-Speicher nun nicht mehr zur Unterstützung der Abarbeitung des Manipulationsvorganges zur Verfügung steht, sodass sich eine vergleichsweise lange Verarbeitungszeit für die Manipulation ergibt.

Der vorliegenden Erfindung liegt daher die Aufgabe zu Grunde, ein Verfahren bzw. eine Anordnung der eingangs genannten Art zur Verfügung zu stellen, welches bzw. welche die oben genannten Nachteile nicht oder zumindest in geringerem Maße aufweist und insbesondere kürzere Verarbeitungszeiten bei der Manipulation des Datenspeichers ermöglicht.

Die vorliegende Erfindung löst diese Aufgabe ausgehend von einem Verfahren gemäß dem Oberbegriff des Anspruchs 1 durch die im kennzeichnenden Teil des Anspruchs 1 angegebenen Merkmale. Sie löst diese Aufgabe weiterhin ausgehend von einem Verfahren gemäß dem Oberbegriff des Anspruchs 15 durch die im kennzeichnenden Teil des Anspruchs 15 angegebenen Merkmale.

Der vorliegenden Erfindung liegt die technische Lehre zu Grunde, dass man besonders kurze Verarbeitungszeiten bei der Manipulation des Datenspeichers erzielt, wenn eine Verarbeitungseinrichtung mit einem Zwischenspeicher verwendet wird, in den Daten aus dem Datenspeicher gelesen werden, wobei ein Teilbereich des Datenspeichers als erster Ausschlussbereich des Datenspeichers festlegbar ist, der nicht in den Zwischenspeicher gelesen wird, und in einem dem Manipulationsschritt vorangehenden Festlegungsschritt der erste Ausschlussbereich derart festgelegt wird, dass er den Überwachungsbereich umfasst.

Hiermit ist es möglich, den Zwischenspeicher zur schnellen Abarbeitung des Manipulationsvorganges zu nutzen und gleichzeitig den Überwachungsbereich des Datenspeichers zuverlässig zu überwachen, um den Manipulationsvorgang zu einem sehr frühen Zeitpunkt als abgeschlossen zu erfassen und demgemäß zu beenden. Hierdurch ergeben sich vorteilhaft kurze Verarbeitungszeiten bei der Manipulation des Datenspeichers.

Die Erfindung kann grundsätzlich im Zusammenhang mit beliebigen Datenspeichern eingesetzt werden, bei denen der Abschluss einer Manipulation eines ersten Speicherbereichs anhand des Zustands eines Überwachungsbereichs des ersten Speicherbereichs erfasst werden kann. Besonders vorteilhaft lässt sie sich im Zusammenhang mit der Manipulation von Flash-Speichern einsetzen.

Wird beispielsweise zur Manipulation eines Flash-Speichers erfindungsgemäß ein Prozessor mit Cache-Speicher verwendet, bei dem eine so genannte Non-Cacheable-Area als Ausschlussbereich festgelegt werden kann, so wird erfindungsgemäß diese Non-Cacheable-Area genau über den Überwachungsbereich, also beispielsweise das Togglebit des aktuell zu bearbeitenden Sektors gelegt. Der Cache-Speicher kann dann genutzt werden, während das Togglebit des aktuell zu bearbeitenden Sektors nicht aus dem Cache-Speicher, sondern direkt aus dem Flash-Speicher gelesen wird.

Das erfindungsgemäße Verfahren kann grundsätzlich für beliebige Manipulationen an einem entsprechenden Datenspeicher eingesetzt werden. Besonders vorteilhaft ist es, wenn sie im Zusammenhang mit Löschvorgängen am Datenspeicher eingesetzt wird, da hier neben der schnellen Abarbeitung der Löschsequenz in der Verarbeitungseinrichtung insbesondere ein schnelles und zuverlässiges Erfassen des Abschlusses des Löschvorgangs im Datenspeicher möglich ist. Bevorzugt ist daher vorgesehen, dass in einem ersten Teilschritt des Manipulationsschritts wenigstens ein Teil der in dem ersten Speicherbereich gespeicherten ersten Daten, insbesondere alle ersten Daten, aus dem ersten Speicherbereich gelöscht werden.

Wie bereits oben erwähnt, ist es für die erzielbare schnelle Verarbeitung von Vorteil, wenn der Manipulationsvorgang möglichst schnell abgeschlossen wird, also nur so lange wie nötig dauert. Vorzugsweise wird daher der Überwachungsbereich überwacht und der erste Teilschritt des Manipulationsschritts beendet, sobald bei der Überwachung des Überwachungsbereichs der Abschluss der Manipulation des ersten Speicherbereichs festgestellt wird.

Mit der vorliegenden Erfindung ist es auch möglich, nur einen Teil der Daten des ersten Speicherbereichs zu manipulieren. Um einen Datenverlust bei der Manipulation zu vermeiden ist bevorzugt vorgesehen, dass in einem der Manipulation vorangehenden Sicherungsschritt wenigstens ein Teil der ersten Daten, insbesondere alle ersten Daten, aus dem ersten Speicherbereich in einen Sicherungsspeicher ausgelesen werden. Bei dem Sicherungsspeicher kann es sich sowohl um den Zwischenspeicher der Verarbeitungseinrichtung als auch um einen separaten Speicher, beispielsweise einen mit der Verarbeitungseinrichtung verbundenen Arbeitsspeicher handeln. Ebenso kann es sich aber auch um einen anderen Speicherbereich des Datenspeichers handeln.

Vorzugsweise wird in dem Manipulationsschritt ein erster Teil der ersten Daten aus dem ersten Speicherbereich manipuliert, während ein zweiter Teil der ersten Daten aus dem ersten Speicherbereich unverändert bleibt. In dem Sicherungsschritt wird dann wenigstens der zweite Teil der ersten Daten aus dem ersten Speicherbereich in den Sicherungsspeicher ausgelesen, um einen Datenverlust im Bereich des unverändert bleibenden zweiten Teils der ersten Daten zu vermeiden.

Die vorliegende Erfindung lässt sich im Übrigen auch vorteilhaft im Zusammenhang mit dem Schreiben von Daten in den ersten Speicherbereich einsetzen. Vorzugsweise ist daher vorgesehen, dass in einem zweiten Teilschritt des Manipulationsschritts zweite Daten in den ersten Speicherbereich geschrieben werden.

Bei besonders vorteilhaften Varianten des erfindungsgemäßen Verfahrens mit zuverlässiger und sicherer Manipulation nur eines Teils der Daten des ersten Speicherbereichs ist vorgesehen, dass in dem zweiten Teilschritt die zweiten Daten zur Manipulation des erstes Teils der ersten Daten in den ersten Speicherbereich geschrieben werden, während der zweite Teil der ersten Daten zur Rekonstruktion aus dem Sicherungsspeicher in den ersten Speicherbereich geschrieben wird. Mit anderen Worten kann hierbei der neue Inhalt des ersten Speicherbereichs auch erst unmittelbar beim Schreiben aus den neuen und den unveränderten alten Datenkomponenten zusammengesetzt werden.

Auch hier ist es im Hinblick auf eine möglichst kurze Verarbeitungszeit wieder von Vorteil, wenn der Schreibvorgang nur so lange wie nötig dauert. Bevorzugt wird daher der Überwachungsbereich überwacht und der zweite Teilschritt des Manipulationsschritts beendet, sobald bei der Überwachung des Überwachungsbereichs der Abschluss der Manipulation des ersten Speicherbereichs festgestellt wird.

Mit der vorliegenden Erfindung lassen sich auch größere Bereiche des Datenspeichers bis hin zu dem gesamten Datenspeicher schnell und einfach manipulieren. Sollen neben dem ersten Speicherbereich weitere, zweite Speicherbereiche des Datenspeichers manipuliert werden, so ist bevorzugt vorgesehen, dass zum Manipulieren eines zweiten Speicherbereichs des Datenspeichers wenigstens der Festlegungsschritt und der nachfolgende Manipulationsschritt für den zweiten Speicherbereich ausgeführt werden.

Mit anderen Worten werden der Festlegungsschritt und der nachfolgende Manipulationsschritt einfach für den betreffenden zweiten Speicherbereich wiederholt. Insbesondere wird dabei der Ausschlussbereich so festgelegt, dass der den entsprechenden Überwachungsbereich des zweiten Speicherbereichs umfasst.

Es versteht sich jedoch, dass bei anderen Varianten der Erfindung auch vorgesehen sein kann, dass zur Manipulation mehrerer Speicherbereiche des Datenspeichers zunächst in einer ersten Manipulationssequenz mehrere oder alle Speicherbereiche sukzessive in einer ersten Weise manipuliert werden, beispielsweise gelöscht werden, und dass sie dann in einer nachfolgenden zweiten Manipulationssequenz sukzessive in einer zweiten Weise manipuliert werden, beispielsweise neu beschrieben werden.

Wie bereits oben erwähnt wurde, kann die Erfindung grundsätzlich im Zusammenhang mit beliebigen Datenspeichern eingesetzt werden, bei denen der Abschluss einer Manipulation eines ersten Speicherbereichs anhand des Zustands eines Überwachungsbereichs des ersten Speicherbereichs erfasst werden kann. Besonders vorteilhaft lässt sie sich im Zusammenhang mit der Manipulation von derart arbeitenden Festkörperspeichern, insbesondere von Flash-Speichern, einsetzen. Vorzugsweise wird daher als Datenspeicher ein Festkörperspeicher verwendet. Bevorzugt wird als Datenspeicher ein Flash-Speicher verwendet, wobei der erste Speicherbereich dann ein erster Sektor des Flash-Speichers ist. Vorzugsweise wird dann als Überwachungsbereich wenigstens ein Togglebit des ersten Sektors überwacht.

Die vorliegende Erfindung kann grundsätzlich im Zusammenhang mit beliebigen Anwendungen zum Einsatz kommen, bei denen ein Datenspeicher entsprechend zu manipulieren ist. Besonders vorteilhaft lässt sie sich im Zusammenhang mit Frankiermaschinen einsetzen. Vorzugsweise wird die Verarbeitungseinrichtung daher als Komponente einer Frankiermaschine, insbesondere als Komponente eines Sicherheitsmoduls einer Frankiermaschine, verwendet.

Die vorliegende Erfindung betrifft weiterhin eine Anordnung zum Manipulieren des Inhalts eines Datenspeichers mit einem Datenspeicher, der wenigstens einen zu manipulierenden ersten Speicherbereich mit einem Überwachungsbereich aufweist, aus dessen Zustandsverlauf der Abschluss einer Manipulation des ersten Speicherbereichs erkennbar ist, und einer mit dem Datenspeicher verbindbaren Verarbeitungseinrichtung, die zum Manipulieren des ersten Speicherbereichs und zur Überwachung des Überwachungsbereichs ausgebildet ist. Erfindungsgemäß weist die Verarbeitungseinrichtung einen Zwischenspeicher auf. Weiterhin ist die Verarbeitungseinrichtung zum Lesen von Daten aus dem Datenspeicher in den Zwischenspeicher ausgebildet, wobei ein Teilbereich des Datenspeichers als erster Ausschlussbereich festlegbar ist, der nicht in den Zwischenspeicher gelesen wird. Schließlich ist die Verarbeitungseinrichtung zum Festlegen des ersten Ausschlussbereichs vor der Manipulation des ersten Speicherbereichs derart ausgebildet, dass der erste Ausschlussbereich den Überwachungsbereich umfasst.

Die vorliegende Anordnung eignet sich zur Durchführung des erfindungsgemäßen Verfahrens. Mit ihr lassen sich die oben beschriebenen Varianten und Vorteile in demselben Maß erzielen, sodass diesbezüglich auf die obigen Ausführungen verwiesen wird.

Bevorzugt ist die Verarbeitungseinrichtung zum Löschen wenigstens eines Teils der in dem ersten Speicherbereich gespeicherten ersten Daten, insbesondere aller ersten Daten, aus dem ersten Speicherbereich ausgebildet. Auch die erfindungsgemäße Anordnung beendet vorzugsweise den Löschvorgang zu frühestmöglichen Zeitpunkt. Vorzugsweise ist die Verarbeitungseinrichtung daher zum Beenden des Löschvorgangs bei Feststellen des Abschlusses der Manipulation des ersten Speicherbereichs durch die Überwachung des Überwachungsbereichs ausgebildet.

Bei bevorzugten Varianten der erfindungsgemäßen Anordnung ist ein Sicherungsspeicher vorgesehen. Die Verarbeitungseinrichtung ist dann zum vor der Manipulation des ersten Speicherbereichs erfolgenden Sichern wenigstens eines Teils der ersten Daten, insbesondere aller ersten Daten, aus dem ersten Speicherbereich den Sicherungsspeicher ausgebildet. Vorzugsweise ist die Verarbeitungseinrichtung zur Manipulation eines ersten Teils der ersten Daten aus dem ersten Speicherbereich und zum Unverändertlassen eines zweiten Teils der ersten Daten aus dem ersten Speicherbereich ausgebildet. Dabei ist sie dann zudem zum Sichern wenigstens des zweiten Teils der ersten Daten in den Sicherungsspeicher ausgebildet.

Vorzugsweise ist die Verarbeitungseinrichtung zum Schreiben von zweiten Daten in den ersten Speicherbereich ausgebildet. Zur Manipulation des ersten Teils der ersten Daten ist die Verarbeitungseinrichtung dabei bevorzugt zum Schreiben der zweiten Daten in den ersten Speicherbereich ausgebildet. Zur Rekonstruktion des zweiten Teils der ersten Daten ist die Verarbeitungseinrichtung dann zum Rücktransferieren des zweiten Teils der ersten Daten aus dem Sicherungsspeicher in den ersten Speicherbereich ausgebildet.

Auch die erfindungsgemäße Anordnung beendet vorzugsweise den Schreibvorgang zum frühestmöglichen Zeitpunkt. Bevorzugt ist die Verarbeitungseinrichtung daher zum Beenden des Schreibvorgangs in den ersten Speicherbereich bei Feststellen des Abschlusses der Manipulation des ersten Speicherbereichs durch die Überwachung des Überwachungsbereichs ausgebildet.

Weitere bevorzugte Ausgestaltungen der Erfindung ergeben sich aus den Unteransprüchen bzw. der nachstehenden Beschreibung bevorzugter Ausführungsbeispiele, welche auf die beigefügten Zeichnungen Bezug nimmt. Es zeigen
- Figur 1: eine schematische Darstellung einer bevorzugten Ausführungsform der erfindungsgemäßen Anordnung, mit der eine bevorzugte Ausführungsform des erfindungsgemäßen Verfahrens zum Manipulieren eines Datenspeichers durchgeführt werden kann;
- Figur 2: ein schematisches Ablaufdiagramm einer bevorzugten Ausführungsform des erfindungsgemäßen Verfahrens zum Manipulieren eines Datenspeichers, die mit der Anordnung aus Figur 1 durchgeführt wird;
- Figur 3: ein schematisches Ablaufdiagramm einer weiteren bevorzugten Ausführungsform des erfindungsgemäßen Verfahrens zum Manipulieren eines Datenspeichers, die mit der Anordnung aus Figur 1 durchgeführt wird.

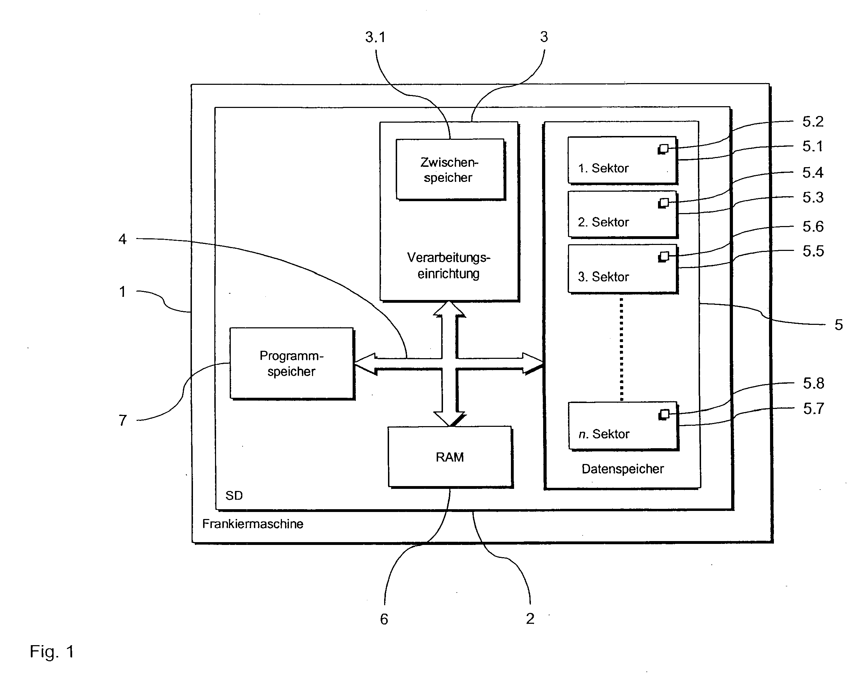

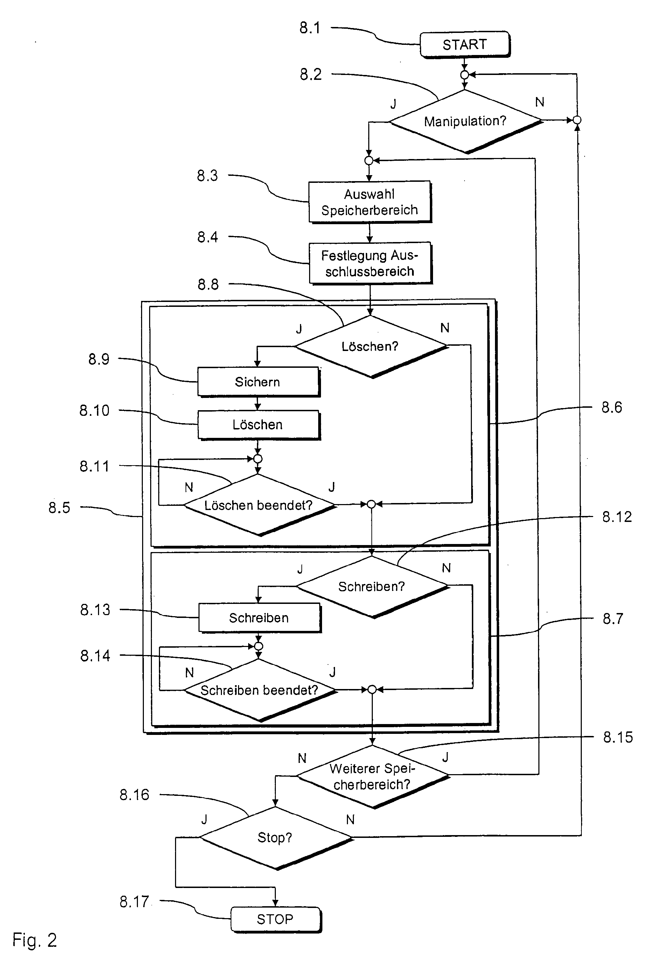

Figur 1 zeigt eine schematische Darstellung einer Frankiermaschine 1 mit einer bevorzugten Ausführungsform der erfindungsgemäßen Anordnung, die in einem Sicherheitsmodul 2 in Form eines so genannten PSD oder SAD, kurz eines so genannten SD, der Frankiermaschine 1 integriert ist. Das Sicherheitsmodul 2 führt unter anderem eine bevorzugte Ausführungsform des erfindungsgemäßen Verfahrens zum Manipulieren eines Datenspeichers durch, wie sie in Figur 2 dargestellt ist.

Das Sicherheitsmodul 2 umfasst eine Verarbeitungseinrichtung in Form eines so genannten RISC-Prozessors 3 mit einem Zwischenspeicher in Form eines Cache-Speichers 3.1. Der Prozessor 3 ist über einen Datenbus 4 mit einem Datenspeicher in Form eines Flash-Speichers 5 verbunden. Weiterhin ist der Prozessor 3 über den Datenbus 4 noch mit einem Arbeitsspeicher 6 in Form eines RAM-Bausteins und einem Programmspeicher 7 verbunden.

Der Flash-Speicher 5 ist ein Flash-Baustein mit n Speicherbereichen in Form von so genannten Sektoren 5.1, 5.3, 5.5, 5.7. Jeder Sektor 5.1, 5.3, 5.5, 5.7 des Flash-Bausteins 5 weist ein so genanntes Togglebit 5.2, 5.4, 5.6 bzw. 5.8 auf. Dieses Togglebit 5.2, 5.4, 5.6 bzw. 5.8 ändert bei einer Manipulation des Sektors 5.1, 5.3, 5.5 bzw. 5.7, zu dem es gehört, kontinuierlich seinen Zustand. Ist die Manipulation des betreffenden Sektors 5.1, 5.3, 5.5 bzw. 5.7 abgeschlossen, nimmt das Togglebit 5.2, 5.4, 5.6 bzw. 5.8 einen stabilen Zustand an.

Obwohl im vorliegenden Beispiel nur ein Speicherbaustein für den Datenspeicher 5 verwendet wird, versteht es sich, dass der Datenspeicher bei anderen Varianten der Erfindung auch aus mehreren Speicherbausteinen, insbesondere mehreren Flash-Bausteinen, aufgebaut sein kann. Weiterhin versteht es sich, dass die Speicherbereiche bzw. Sektoren sowohl gleiche als auch unterschiedliche Größe haben können.

Soll der Inhalt des Flash-Bausteins 5 manipuliert werden, beispielsweise bestimmte Daten gelöscht oder geändert werden, greift der Prozessor 3 auf ein entsprechendes Programm zu, das in dem Programmspeicher 7 abgelegt ist. Sollen dabei neue Daten in den Flash-Baustein 5 geschrieben werden, so werden diese zunächst in dem Arbeitsspeicher 6 abgelegt.

Bei dem Prozessor 3 handelt es sich um einen Prozessor, bei dem ein Ausschlussbereich in Form einer so genannten Non-Cacheable-Area variabel festgelegt werden kann. Bei dieser Non-Cacheable-Area handelt es sich um einen wählbaren Adressenbereich, beispielsweise im Flashbaustein 5, der während der Verarbeitung nicht in den Cache-Speicher 3.1 des Prozessors gelesen wird.

Im Folgenden wird unter Bezugnahme auf die Figuren 1 und 2 eine bevorzugte Ausführungsform des erfindungsgemäßen Verfahrens zum Manipulieren eines Datenspeichers beschrieben, die mit der Anordnung aus Figur 1 durchgeführt wird.

Zunächst wird der Verfahrensablauf in einem Schritt 8.1 gestartet. In einem Schritt 8.2 überprüft der Prozessor 3, ob eine Manipulation des Flash-Bausteins 5 vorgenommen werden soll. Bei der Manipulation des Flash-Bausteins 5 kann es sich sowohl um ein Löschen als auch ein Beschreiben aller oder bestimmter Speicherbereiche des Flash-Bausteins 5 handeln.

Die Manipulation des Flash-Bausteins 5 kann durch einen externen Befehl ausgelöst werden, der über eine - nicht dargestellte - Schnittstelle and den Prozessor 3 übergeben wurde. Ebenso kann es sich aber auch um einen internen Vorgang im Sicherheitsmodul 2 handeln, welcher die Manipulation des Flash-Bausteins 5 auslöst.

Sollen im Rahmen der Manipulation beispielsweise neue Daten in den Flash-Baustein 5 geschrieben werden, so werden diese zunächst in dem Arbeitsspeicher 6 abgelegt. Anschließend werden die Adresse der neuen Daten, also die Quelladresse, die Länge der neuen Daten und die Zieladresse der neuen Daten im Flash-Baustein 5 an einen Flash-Treiber übergeben. Dieser Flash-Treiber wird durch den Prozessor 3 realisiert, der hierzu zunächst auf ein entsprechendes Treiberprogramm im Programmspeicher 7 zugreift. Um die Verarbeitung zu beschleunigen lädt der Prozessor 3 die erforderlichen Daten dabei in seinen Cache-Speicher 3.1.

In einem Schritt 8.3 ermittelt der Flash-Treiber dann zunächst aus der Länge der neuen Daten und der Zieladresse der neuen Daten im Flash-Baustein 5, welcher bzw. welche Sektoren des Flash-Bausteins 5 manipuliert werden sollen. Anschließend erfolgt durch den Prozessor 3 die Auswahl des zuerst zu manipulierenden ersten Speicherbereichs des Flash-Bausteins 5. Im vorliegenden Beispiel soll dieser erste Speicherbereich der erste Sektor 5.1 sein.

In einem Festlegungsschritt 8.4 legt der Prozessor 3 den Ausschlussbereich, also die Non-Cacheable-Area, so fest, dass sie das Togglebit 5.2 des ersten Sektors 5.1 umfasst. Hierdurch wird, wie oben beschrieben, erreicht, dass der Prozessor 3 das Togglebit 5.2 bei der Verarbeitung nicht in den Cache-Speicher liest. Soll während der Verarbeitung die Adresse des Togglebit 5.2 angesprochen und der dortige Speicherzustand erfasst werden, so wird hierdurch erreicht, dass der Prozessor nicht den entsprechenden Wert aus dem Cache-Speicher 3.1 ermittelt, sondern tatsächlich auf das Togglebit 5.2 des ersten Sektors 5.1 im Flash-Baustein 5 zugreift.

In einem anschließenden Manipulationsschritt 8.5 erfolgt dann die angeforderte Manipulation des ersten Speicherbereichs, also des ersten Sektors 5.1. Dazu erfolgt in einem ersten Teilschritt 8.6 des Manipulationsschritts 8.5 ein Löschvorgang der ersten Daten, die in dem ersten Sektor 5.1 gespeichert sind. Anschließend erfolgt in einem zweiten Teilschritt 8.7 des Manipulationsschritts 8.5 ein Schreibvorgang bei dem Daten entsprechend der Manipulationsanforderung in den ersten Sektor 5.1 geschrieben werden.

In einem Schritt 8.8 des ersten Teilschritts 8.6 wird zunächst überprüft, ob entsprechend der Manipulationsanforderung ein Löschen von Daten des ersten Sektors 5.1 erforderlich ist. Wie eingangs erläutert wurde, muss bzw. kann dabei immer nur ein gesamter Sektor des Flash-Bausteins 5 gelöscht werden. Das Löschen kann allerdings auch entfallen, wenn beispielsweise bekannt ist, dass der erste Sektor sich bereits in einem gelöschten oder noch nie beschriebenen Zustand befindet.

Ist ein Löschen von Daten des ersten Sektors 5.1 erforderlich und soll insgesamt aber nur ein erster Teil der ersten Daten des ersten Sektors 5.1 verändert werden, während ein zweiter Teil der ersten Daten unverändert bleiben soll, so wird in einem Sicherungsschritt 8.9 des ersten Teilschritts 8.6 zumindest der zweite Teil der ersten Daten in den Cache-Speicher 3.1 als Sicherungsspeicher geschrieben.

Um einen Datenverlust, beispielsweise bei einem Fehlschlagen des Löschvorgangs etc., zu vermeiden, werden im vorliegenden Fall alle ersten Daten in den Cache-Speicher 3.1 geschrieben. Auf diese Weise kann der alte Zustand im Falle eines Fehlers rekonstruiert werden. Es versteht sich jedoch, dass bei anderen Varianten der Erfindung auch nur der zweite Teil der ersten Daten entsprechend gesichert werden kann.

In einem Schritt 8.10 des ersten Teilschritts 8.6 erfolgt dann das Löschen des ersten Sektors 5.1, wozu durch den Prozessor 3 eine entsprechende Löschsequenz an den Flash-Baustein 5 übermittelt wird.

In einem Schritt 8.11 des ersten Teilschritts 8.6 überprüft der Prozessor 3, ob der Löschvorgang des ersten Sektors 5.1 abgeschlossen ist. Hierzu greift er auf das Togglebit 5.2 des ersten Sektors 5.1 zu. Dieses Togglebit 5.2 stellt, wie oben erläutert, einen Überwachungsbereich des ersten Sektors 5.1 dar, anhand dessen Zustandsverlauf der Abschluss des Löschvorganges erfasst werden kann.

Die in dem Festlegungsschritt 8.4 erfolgte Festlegung des Ausschlussbereichs (also der Non-Cacheable-Area), derart, dass er das Togglebit 5.2 des ersten Sektors 5.1 (also den Überwachungsbereich), umfasst stellt sicher, dass der Prozessor 3 nicht den entsprechenden Wert aus dem Cache-Speicher 3.1 ermittelt, sondern tatsächlich auf das Togglebit 5.2 des ersten Sektors 5.1 im Flash-Baustein 5 zugreift.

Wird anhand wechselnder Zustände des Togglebits 5.2 festgestellt, dass der Löschvorgang noch nicht abgeschlossen ist, wird die Löschsequenz fortgesetzt. Andernfalls beendet der Prozessor 3 die eingeleitete Löschsequenz und damit den ersten Teilschritt 8.6 unmittelbar.

Hierdurch ist zum einen eine zuverlässige frühzeitige Erkennung des Abschlusses des Löschvorganges möglich, sodass die Verarbeitung zu dem frühestmöglichen Zeitpunkt beendet werden kann. Zum anderen steht der Cache-Speicher 3.1 mit seinen Vorteilen hinsichtlich der erzielbaren Verarbeitungsgeschwindigkeit während der gesamten Verarbeitung zur Verfügung. Insgesamt wird daher eine Verarbeitungsgeschwindigkeit erzielt, die in der Regel mindestens doppelt so hoch ist wie die Verarbeitungsgeschwindigkeit bei den bisher bekannten Verfahren mit Abschaltung des gesamten Cache-Speichers.

In einem Schritt 8.12 des zweiten Teilschritts 8.7 wird dann zunächst überprüft, ob entsprechend der Manipulationsanforderung ein Schreiben von Daten in den ersten Sektor 5.1 erforderlich ist.

Ist dies der Fall, so wird in einem Schritt 8.13 des zweiten Teilschritts 8.7 eine Schreibsequenz initiiert. Soll insgesamt nur ein erster Teil der ersten Daten des ersten Sektors 5.1 verändert werden, während ein zweiter Teil der ersten Daten unverändert bleiben soll, werden im Rahmen Schreibsequenz zum einen die zweiten Daten welche den zu modifizierenden ersten Teil der ersten Daten ersetzen und zum anderen der zweite Teil der ersten Daten, der unverändert bleiben soll, in den ersten Sektor 5.1 geschrieben. Der zweite Teil der ersten Daten wird dabei aus dem Cache-Speicher 3.1 als Sicherungsspeicher rekonstruiert.

In einem Schritt 8.14 des zweiten Teilschritts 8.7 überprüft der Prozessor 3, ob der Schreibvorgang in den ersten Sektor 5.1 abgeschlossen ist. Hierzu greift er dank der beschriebenen Festlegung des Ausschlussbereichs, also der Non-Cacheable-Area, wiederum direkt auf das Togglebit 5.2 des ersten Sektors 5.1 als Überwachungsbereich zu.

Wird anhand wechselnder Zustände des Togglebits 5.2 festgestellt, dass der Schreibvorgang noch nicht abgeschlossen ist, wird die Schreibsequenz fortgesetzt. Andernfalls beendet der Prozessor 3 die eingeleitete Schreibsequenz und damit den zweiten Teilschritt 8.7 unmittelbar.

Hierdurch ist wiederum zum einen eine zuverlässige frühzeitige Erkennung des Abschlusses des Schreibvorganges möglich, sodass die Verarbeitung zu dem frühestmöglichen Zeitpunkt beendet werden kann. Zum anderen steht der Cache-Speicher 3.1 mit seinen Vorteilen hinsichtlich der erzielbaren Verarbeitungsgeschwindigkeit während der gesamten Verarbeitung zur Verfügung. Insgesamt wird daher eine Verarbeitungsgeschwindigkeit erzielt, die in der Regel mindestens doppelt so hoch ist wie die Verarbeitungsgeschwindigkeit bei den bisher bekannten Verfahren mit Abschaltung des gesamten Cache-Speichers.

In einem Schritt 8.15 überprüft der Prozessor 3 dann, ob gemäß der Manipulationsanforderung ein weiterer, zweiter Speicherbereich, also ein weiterer Sektor 5.3, 5.5, 5.7, des Flash-Bausteins 5 zu manipulieren ist. Ist dies der Fall, wird zu Schritt 8.3 zurück gesprungen, in dem dann der nächste zu manipulierende Sektor 5.3, 5.5, 5.7 des Flash-Bausteins 5 ausgewählt wird, für den dann die Schritte 8.4 und 8.5 durchgeführt werden.

Auf diese Weise werden alle gemäß der Manipulationsanforderung zu manipulierenden Sektoren des Flash-Bausteins 5 manipuliert. Wurde in dem Schritt 8.15 festgestellt, dass kein weiterer Sektor des Flash-Bausteins 5 zu manipulieren ist, wird in einem Schritt 8.16 schließlich überprüft, ob der Verfahrensablauf beendet werden soll. Ist dies der Fall, endet der Verfahrensablauf in einem Schritt 8.17. Andernfalls wird zu dem Schritt 8.2 zurück gesprungen.

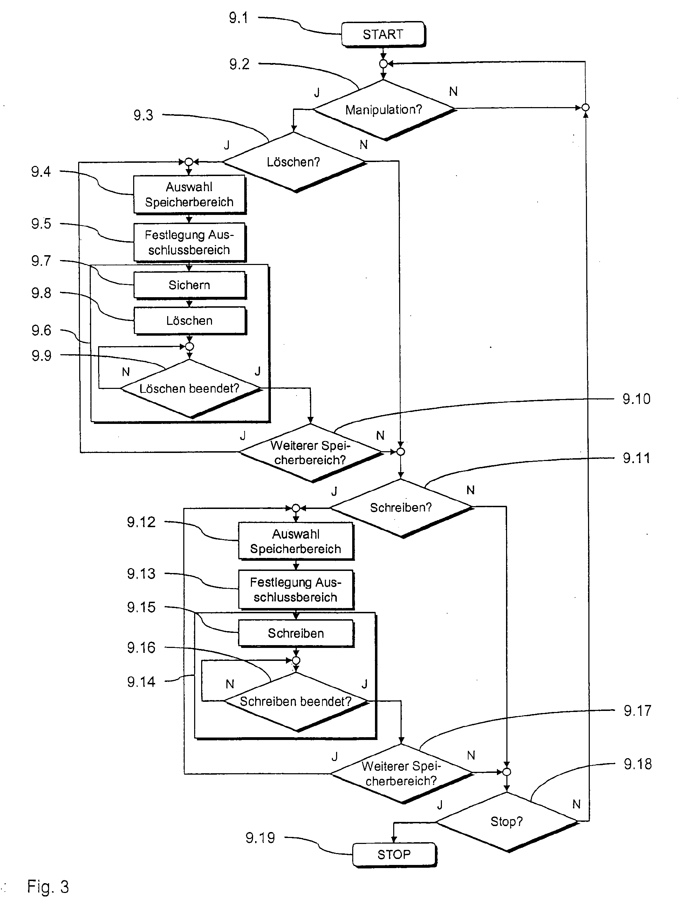

Im Folgenden wird unter Bezugnahme auf die Figuren 1 und 3 eine weitere bevorzugte Ausführungsform des erfindungsgemäßen Verfahrens zum Manipulieren eines Datenspeichers beschrieben, die mit der Anordnung aus Figur 1 durchgeführt werden kann.

Zunächst wird der Verfahrensablauf in einem Schritt 9.1 gestartet. In einem Schritt 9.2 überprüft der Prozessor 3, ob eine Manipulation des Flash-Bausteins 5 vorgenommen werden soll. Bei der Manipulation des Flash-Bausteins 5 kann es sich sowohl um ein Löschen als auch ein Beschreiben aller oder bestimmter Speicherbereiche des Flash-Bausteins 5 handeln.

Die Manipulation des Flash-Bausteins 5 kann auch hier wieder durch einen externen Befehl ausgelöst werden, der über eine - nicht dargestellte - Schnittstelle and den Prozessor 3 übergeben wurde. Ebenso kann es sich aber wiederum auch um einen internen Vorgang im Sicherheitsmodul 2 handeln, welcher die Manipulation des Flash-Bausteins 5 auslöst.

Sollen im Rahmen der Manipulation beispielsweise neue Daten in den Flash-Baustein 5 geschrieben werden, so werden diese zunächst in dem Arbeitsspeicher 6 abgelegt. Anschließend werden die Adresse der neuen Daten, also die Quelladresse, die Länge der neuen Daten und die Zieladresse der neuen Daten im Flash-Baustein 5 an einen Flash-Treiber übergeben. Dieser Flash-Treiber wird durch den Prozessor 3 realisiert, der hierzu zunächst auf ein entsprechendes Treiberprogramm im Programmspeicher 7 zugreift. Um die Verarbeitung zu beschleunigen lädt der Prozessor 3 die erforderlichen Daten dabei in seinen Cache-Speicher 3.1.

In einem Schritt 9.3 wird zunächst überprüft, ob entsprechend der Manipulationsanforderung ein Löschen von Daten erforderlich ist. Wie eingangs erläutert wurde, muss bzw. kann dabei immer nur ein gesamter Sektor des Flash-Bausteins 5 gelöscht werden. Das Löschen kann allerdings auch entfallen, wenn beispielsweise bekannt ist, dass die betroffenen Sektoren sich bereits in einem gelöschten oder noch nie beschriebenen Zustand befinden.

In einem Schritt 9.4 ermittelt der Flash-Treiber dann zunächst aus der Länge der neuen Daten und der Zieladresse der neuen Daten im Flash-Baustein 5, welcher bzw. welche Sektoren des Flash-Bausteins 5 manipuliert werden sollen. Anschließend erfolgt durch den Prozessor 3 die Auswahl des zuerst zu manipulierenden ersten Speicherbereichs des Flash-Bausteins 5. Im vorliegenden Beispiel soll dieser erste Speicherbereich der erste Sektor 5.1 sein.

In einem Festlegungsschritt 9.5 legt der Prozessor 3 den Ausschlussbereich, also die Non-Cacheable-Area, so fest, dass sie das Togglebit 5.2 des ersten Sektors 5.1 umfasst. Hierdurch wird, wie oben beschrieben, erreicht, dass der Prozessor 3 während der Verarbeitung nicht den entsprechenden Wert aus dem Cache-Speicher 3.1 ermittelt, sondern tatsächlich auf das Togglebit 5.2 des ersten Sektors 5.1 im Flash-Baustein 5 zugreift.

In einem anschließenden ersten Manipulationsschritt 9.6 erfolgt dann ein Löschvorgang der ersten Daten, die in dem ersten Sektor 5.1 gespeichert sind. Ist dabei insgesamt aber nur ein erster Teil der ersten Daten des ersten Sektors 5.1 zu verändern, während ein zweiter Teil der ersten Daten unverändert bleiben soll, so wird in einem Sicherungsschritt 9.7 des ersten Manipulationsschritts 9.6 zumindest der zweite Teil der ersten Daten in den Arbeitsspeicher 6 als Sicherungsspeicher geschrieben. Um einen Datenverlust, beispielsweise bei einem Fehlschlagen des Löschvorgangs etc., zu vermeiden, werden im vorliegenden Fall alle ersten Daten in den Arbeitsspeicher 6 geschrieben. Auf diese Weise kann der alte Zustand im Falle eines Fehlers rekonstruiert werden.

Es versteht sich hierbei jedoch, dass der Sicherungsschritt bei anderen Varianten Erfindung der aber auch in jedem Fall durchgeführt werden kann. Weiterhin versteht es sich, dass als Sicherungsspeicher auch ein anderer Speicher, beispielsweise der Cache-Speicher 3.1 oder aber auch ein anderer Sektor des Flash-Bausteins 5, verwendet werden kann.

In einem Schritt 9.8 des ersten Manipulationsschritts 9.6 erfolgt dann das Löschen des ersten Sektors 5.1, wozu durch den Prozessor 3 eine entsprechende Löschsequenz an den Flash-Baustein 5 übermittelt wird.

In einem Schritt 9.9 des ersten Manipulationsschritts 9.6 überprüft der Prozessor 3, ob der Löschvorgang des ersten Sektors 5.1 abgeschlossen ist. Hierzu greift er auf das Togglebit 5.2 des ersten Sektors 5.1 zu. Dieses Togglebit 5.2 stellt, wie oben erläutert, einen Überwachungsbereich des ersten Sektors 5.1 dar, anhand dessen Zustandsverlauf der Abschluss des Löschvorganges erfasst werden kann.

Die in dem Festlegungsschritt 9.5 erfolgte Festlegung des Ausschlussbereichs, also der Non-Cacheable-Area, stellt sicher, dass der Prozessor 3 nicht den entsprechenden Wert aus dem Cache-Speicher 3.1 ermittelt, sondern tatsächlich auf das Togglebit 5.2 des ersten Sektors 5.1 im Flash-Baustein 5 zugreift.

Wird anhand wechselnder Zustände des Togglebits 5.2 festgestellt, dass der Löschvorgang noch nicht abgeschlossen ist, wird die Löschsequenz fortgesetzt. Andernfalls beendet der Prozessor 3 die eingeleitete Löschsequenz und damit den ersten Manipulationsschritt 9.6 unmittelbar.

Hierdurch ist zum einen eine zuverlässige frühzeitige Erkennung des Abschlusses des Löschvorganges möglich, sodass die Verarbeitung zu dem frühestmöglichen Zeitpunkt beendet werden kann. Zum anderen steht der Cache-Speicher 3.1 mit seinen Vorteilen hinsichtlich der erzielbaren Verarbeitungsgeschwindigkeit während der gesamten Verarbeitung zur Verfügung. Insgesamt wird daher eine Verarbeitungsgeschwindigkeit erzielt, die in der Regel mindestens doppelt so hoch ist wie die Verarbeitungsgeschwindigkeit bei den bisher bekannten Verfahren mit Abschaltung des gesamten Cache-Speichers.

In einem Schritt 9.10 überprüft der Prozessor 3 dann, ob gemäß der Manipulationsanforderung ein weiterer, zweiter Speicherbereich, also ein weiterer Sektor 5.3, 5.5, 5.7, des Flash-Bausteins 5 zu löschen ist. Ist dies der Fall, wird zu Schritt 9.4 zurück gesprungen, in dem dann der nächste zu löschende Sektor 5.3, 5.5, 5.7 des Flash-Bausteins 5 ausgewählt wird, für den dann die Schritte 9.4 und 9.6 durchgeführt werden.

Auf diese Weise werden alle gemäß der Manipulationsanforderung zu löschenden Sektoren des Flash-Bausteins 5 gelöscht. Wurde in dem Schritt 9.10 festgestellt, dass kein weiterer Sektor des Flash-Bausteins 5 zu löschen ist, wird in einem Schritt 9.11 überprüft, ob ein Schreibvorgang durchzuführen ist.

Ist dies der Fall, ermittelt der Flash-Treiber in einem Schritt 9.12 dann wiederum zunächst welcher bzw. welche Sektoren des Flash-Bausteins 5 beschrieben werden sollen. Anschließend erfolgt durch den Prozessor 3 die Auswahl des zuerst zu beschreibenden ersten Speicherbereichs des Flash-Bausteins 5. Im vorliegenden Beispiel soll dieser erste Speicherbereich der erste Sektor 5.1 sein.

In einem Festlegungsschritt 9.13 legt der Prozessor 3 wiederum den Ausschlussbereich, also die Non-Cacheable-Area, so fest, dass der Prozessor 3 während der Verarbeitung tatsächlich auf das Togglebit 5.2 des ersten Sektors 5.1 im Flash-Baustein 5 zugreift.

In einem anschließenden zweiten Manipulationsschritt 9.14 erfolgt dann das Schreiben in den ersten Sektor 5.1. In einem Schritt 9.15 des zweiten Manipulationsschritts 9.14 wird hierzu eine Schreibsequenz initiiert. Soll insgesamt nur ein erster Teil der ersten Daten des ersten Sektors 5.1 verändert werden, während ein zweiter Teil der ersten Daten unverändert bleiben, werden im Rahmen Schreibsequenz zum einen die zweiten Daten welche den zu modifizierenden ersten Teil der ersten Daten ersetzen und zum anderen der zweite Teil der ersten Daten, der unverändert bleiben soll, in den ersten Sektor 5.1 geschrieben. Der zweite Teil der ersten Daten wird dabei aus dem Arbeitsspeicher 6 als Sicherungsspeicher rekonstruiert.

In einem Schritt 9.16 des zweiten Manipulationsschritts 9.14 überprüft der Prozessor 3, ob der Schreibvorgang in den ersten Sektor 5.1 abgeschlossen ist. Hierzu greift er dank der beschriebenen Festlegung des Ausschlussbereichs, also der Non-Cacheable-Area, wiederum direkt auf das Togglebit 5.2 des ersten Sektors 5.1 als Überwachungsbereich zu.

Wird anhand wechselnder Zustände des Togglebits 5.2 festgestellt, dass der Schreibvorgang noch nicht abgeschlossen ist, wird die Schreibsequenz fortgesetzt. Andernfalls beendet der Prozessor 3 die eingeleitete Schreibsequenz und damit den zweiten Manipulationsschritt 9.14 unmittelbar.

Hierdurch ist wiederum zum einen eine zuverlässige frühzeitige Erkennung des Abschlusses des Schreibvorganges möglich, sodass die Verarbeitung zu dem frühestmöglichen Zeitpunkt beendet werden kann. Zum anderen steht der Cache-Speicher 3.1 mit seinen Vorteilen hinsichtlich der erzielbaren Verarbeitungsgeschwindigkeit während der gesamten Verarbeitung zur Verfügung. Insgesamt wird daher eine Verarbeitungsgeschwindigkeit erzielt, die in der Regel mindestens doppelt so hoch ist wie die Verarbeitungsgeschwindigkeit bei den bisher bekannten Verfahren mit Abschaltung des gesamten Cache-Speichers.

In einem Schritt 9.17 überprüft der Prozessor 3 dann, ob gemäß der Manipulationsanforderung ein weiterer, zweiter Speicherbereich, also ein weiterer Sektor 5.3, 5.5, 5.7, des Flash-Bausteins 5 zu beschreiben ist. Ist dies der Fall, wird zu Schritt 9.12 zurück gesprungen, in dem dann der nächste zu beschreibende Sektor 5.3, 5.5, 5.7 des Flash-Bausteins 5 ausgewählt wird, für den dann die Schritte 9.13 und 9.14 durchgeführt werden.

Auf diese Weise werden alle gemäß der Manipulationsanforderung zu beschreibenden Sektoren des Flash-Bausteins 5 manipuliert. Wurde in dem Schritt 9.17 festgestellt, dass kein weiterer Sektor des Flash-Bausteins 5 zu beschreiben ist, wird in einem Schritt 9.18 schließlich überprüft, ob der Verfahrensablauf beendet werden soll. Ist dies der Fall, endet der Verfahrensablauf in einem Schritt 9.19. Andernfalls wird zu dem Schritt 9.2 zurück gesprungen.

Die vorliegende Erfindung wurde vorstehend anhand von Beispielen beschrieben, bei denen jeweils nur ein einziger Ausschlussbereich aktuell festgelegt und verwendet wurde. Es versteht sich jedoch, dass bei anderen Varianten der Erfindung gegebenenfalls auch mehrere Ausschlussbereiche, also beispielsweise Non-Cacheable-Areas, gleichzeitig festgelegt werden können. Der Festlegungsschritt ist dann gegebenenfalls nur einmal für alle betroffenen Speicherbereiche durchzuführen.

Weiterhin wurde die vorliegende Erfindung vorstehend ausschließlich anhand von Beispielen beschrieben, bei denen die erfindungsgemäße Anordnung mit Verarbeitungseinrichtung und Datenspeicher integriert in einer gemeinsamen Einheit realisiert ist. Es versteht sich jedoch, dass die vorliegende Erfindung auch im Zusammenhang mit beliebigen anderen Gestaltungen zum Einsatz kommen kann, bei denen ein entsprechender Datenspeicher lösbar und gegebenenfalls nur zeitweise mit der Verarbeitungseinrichtung verbunden ist. Insbesondere kann die Verarbeitungseinrichtung als externe Programmiereinheit ausgeführt sein, die lediglich zum Manipulieren, beispielsweise Programmieren, des Datenspeichers an den Datenspeicher angeschlossen wird.

Schließlich wurde die vorliegende Erfindung vorstehend ausschließlich anhand von Beispielen beschrieben, bei denen sie in einer Frankiermaschine Verwendung findet. Es versteht sich jedoch, dass die vorliegende Erfindung auch im Zusammenhang mit beliebigen anderen Anwendungen zum Einsatz kommen kann, bei denen ein Flash-Speicher oder ein vergleichbar arbeitender Speichertyp manipuliert werden sollen.

## Patentansprüche

1. Verfahren zum Manipulieren des Inhalts eines Datenspeichers, bei dem eine mit dem Datenspeicher (5) verbindbare Verarbeitungseinrichtung (3) in wenigstens einem Manipulationsschritt (8.5; 9.6, 9.14) wenigstens einen zu manipulierenden ersten Speicherbereich (5.1) des Datenspeichers (5) manipuliert, wobei die Verarbeitungseinrichtung (3) einen Überwachungsbereich (5.2) des ersten Speicherbereichs (5.1) überwacht, aus dessen Zustandsverlauf der Abschluss der Manipulation des ersten Speicherbereichs (5.1) erkennbar ist, **dadurch gekennzeichnet, dass**
- eine Verarbeitungseinrichtung (3) mit einem Zwischenspeicher (3.1) verwendet wird, in den Daten aus dem Datenspeicher (5) gelesen werden, wobei ein Teilbereich des Datenspeichers (5) als erster Ausschlussbereich des Datenspeichers (5) festlegbar ist, der nicht in den Zwischenspeicher (3.1) gelesen wird, und
- in einem dem Manipulationsschritt (8.5; 9.6, 9.14) vorangehenden Festlegungsschritt (8.4; 9.5, 9.13) der erste Ausschlussbereich derart festgelegt wird, dass er den Überwachungsbereich (5.2) umfasst.

2. Verfahren nach Anspruch 1, **dadurch gekennzeichnet, dass** in einem ersten Teilschritt (8.6) des Manipulationsschritts (8.5) wenigstens ein Teil der in dem ersten Speicherbereich (5.1) gespeicherten ersten Daten, insbesondere alle ersten Daten, aus dem ersten Speicherbereich (5.1) gelöscht werden.

3. Verfahren nach Anspruch 2, **dadurch gekennzeichnet, dass** der Überwachungsbereich (5.2) überwacht wird und der erste Teilschritt (8.6) des Manipulationsschritts (8.5) beendet wird, sobald bei der Überwachung des Überwachungsbereichs (5.2) der Abschluss der Manipulation des ersten Speicherbereichs (5.1) festgestellt wird.

4. Verfahren nach einem der vorhergehenden Ansprüche, **dadurch gekennzeichnet, dass** in einem der Manipulation des ersten Speicherbereichs (5.1) vorangehenden Sicherungsschritt (8.9; 9.7) wenigstens ein Teil der ersten Daten, insbesondere alle ersten Daten, aus dem ersten Speicherbereich (5.1) in einen Sicherungsspeicher (3.1; 6) ausgelesen werden.

5. Verfahren nach Anspruch 4, **dadurch gekennzeichnet, dass**
- in dem Manipulationsschritt (8.5) ein erster Teil der ersten Daten aus dem ersten Speicherbereich (5.1) manipuliert wird, während ein zweiter Teil der ersten Daten aus dem ersten Speicherbereich (5.1) unverändert bleibt, und
- in dem Sicherungsschritt (8.9) wenigstens der zweite Teil der ersten Daten aus dem ersten Speicherbereich (5.1) in den Sicherungsspeicher (3.1; 6) ausgelesen wird.

6. Verfahren nach einem der vorhergehenden Ansprüche, **dadurch gekennzeichnet, dass** in einem zweiten Teilschritt (8.7) des Manipulationsschritts (8.5) zweite Daten in den ersten Speicherbereich (5.1) geschrieben werden.

7. Verfahren nach Anspruch 5 und 6, **dadurch gekennzeichnet, dass** in dem zweiten Teilschritt
- die zweiten Daten zur Manipulation des erstes Teils der ersten Daten in den ersten Speicherbereich (5.1) geschrieben werden und
- der zweite Teil der ersten Daten zur Rekonstruktion aus dem Sicherungsspeicher (3.1; 6) in den ersten Speicherbereich (5.1) geschrieben wird.

8. Verfahren nach Anspruch 6 oder 7, **dadurch gekennzeichnet, dass** der Überwachungsbereich (5.2) überwacht wird und der zweite Teilschritt (8.7) des Manipulationsschritts (8.5) beendet wird, sobald bei der Überwachung des Überwachungsbereichs (5.2) der Abschluss der Manipulation des ersten Speicherbereichs (5.1) festgestellt wird.

9. Verfahren nach einem der vorhergehenden Ansprüche, **dadurch gekennzeichnet, dass** zum Manipulieren eines zweiten Speicherbereichs (5.3, 5.5, 5.7) des Datenspeichers (5) wenigstens der Festlegungsschritt (8.4) und der nachfolgende Manipulationsschritt (8.5) für den zweiten Speicherbereich (5.3, 5.5, 5.7) ausgeführt werden.

10. Verfahren nach einem der vorhergehenden Ansprüche, **dadurch gekennzeichnet, dass** als Datenspeicher (5) ein Festkörperspeicher verwendet wird, insbesondere ein Flash-Speicher verwendet wird.

11. Verfahren nach Anspruch 10, **dadurch gekennzeichnet, dass** als Datenspeicher (5) ein Flash-Speicher verwendet wird und der erste Speicherbereich (5.1) ein erster Sektor des Flash-Speichers ist.

12. Verfahren nach Anspruch 11, **dadurch gekennzeichnet, dass** der Überwachungsbereich wenigstens ein Togglebit (5.2) des ersten Sektors (5.1) ist.

13. Verfahren nach einem der vorhergehenden Ansprüche, **dadurch gekennzeichnet, dass** als Verarbeitungseinrichtung (3) ein Prozessor mit einem Cache-Speicher als Zwischenspeicher (3.1) verwendet wird.

14. Verfahren nach einem der vorhergehenden Ansprüche, **dadurch gekennzeichnet, dass** die Verarbeitungseinrichtung (3) und/oder der Datenspeicher (5) als Komponente einer Frankiermaschine (1), insbesondere als Komponente eines Sicherheitsmoduls (2) einer Frankiermaschine (1), verwendet wird.

15. Anordnung zum Manipulieren des Inhalts eines Datenspeichers mit
- einem Datenspeicher (5), der wenigstens einen zu manipulierenden ersten Speicherbereich (5.1) mit einem Überwachungsbereich (5.2) aufweist, aus dessen Zustandsverlauf der Abschluss einer Manipulation des ersten Speicherbereichs (5.1) erkennbar ist, und
- einer mit dem Datenspeicher (5) verbindbaren Verarbeitungseinrichtung (3), die zum Manipulieren des ersten Speicherbereichs (5.1) und zur Überwachung des Überwachungsbereichs (5.2) ausgebildet ist,
**dadurch gekennzeichnet, dass**
- die Verarbeitungseinrichtung (3) einen Zwischenspeicher (3.1) aufweist,
- die Verarbeitungseinrichtung (3) zum Lesen von Daten aus dem Datenspeicher (5) in den Zwischenspeicher (3.1) ausgebildet ist, wobei ein Teilbereich des Datenspeichers (5) als erster Ausschlussbereich festlegbar ist, der nicht in den Zwischenspeicher (3.1) gelesen wird, und
- die Verarbeitungseinrichtung (3) zum Festlegen des ersten Ausschlussbereichs vor der Manipulation des ersten Speicherbereichs (5.1) derart ausgebildet ist, dass der erste Ausschlussbereich den Überwachungsbereich (5.2) umfasst.

16. Anordnung nach Anspruch 15, **dadurch gekennzeichnet, dass** die Verarbeitungseinrichtung (3) zum Löschen wenigstens eines Teils der in dem ersten Speicherbereich (5.1) gespeicherten ersten Daten, insbesondere aller ersten Daten, aus dem ersten Speicherbereich (5.1) ausgebildet ist.

17. Anordnung nach Anspruch 16, **dadurch gekennzeichnet, dass** die Verarbeitungseinrichtung (3) zum Beenden des Löschvorgangs bei Feststellen des Abschlusses der Manipulation des ersten Speicherbereichs (5.1) durch die Überwachung des Überwachungsbereichs (5.2) ausgebildet ist.

18. Anordnung nach einem der Ansprüche 15 bis 17, **dadurch gekennzeichnet, dass**
- ein Sicherungsspeicher (3.1; 6) vorgesehen ist und
- die Verarbeitungseinrichtung (3) zum Sichern wenigstens eines Teils der ersten Daten, insbesondere aller ersten Daten, aus dem ersten Speicherbereich (5.1) den Sicherungsspeicher (3.1; 6) vor der Manipulation des ersten Speicherbereichs (5.1) ausgebildet ist.

19. Anordnung nach Anspruch 18, **dadurch gekennzeichnet, dass** die Verarbeitungseinrichtung (3)
- zur Manipulation eines ersten Teils der ersten Daten aus dem ersten Speicherbereich (5.1) und zum Unverändertlassen eines zweiten Teils der ersten Daten aus dem ersten Speicherbereich (5.1) ausgebildet ist, und
- zum Sichern wenigstens des zweiten Teils der ersten Daten in den Sicherungsspeicher (3.1; 6) ausgebildet ist.

20. Anordnung nach einem der vorhergehenden Ansprüche, **dadurch gekennzeichnet, dass** die Verarbeitungseinrichtung (3) zum Schreiben von zweiten Daten in den ersten Speicherbereich (5.1) ausgebildet ist.

21. Anordnung nach Anspruch 19 und 20, **dadurch gekennzeichnet, dass** die Verarbeitungseinrichtung (3)
- zur Manipulation des erstes Teils der ersten Daten zum Schreiben der zweiten Daten in den ersten Speicherbereich (5.1) ausgebildet ist und
- zur Rekonstruktion des zweiten Teils der ersten Daten zum Rücktransferieren des zweiten Teils der ersten Daten aus dem Sicherungsspeicher (3.1; 6) in den ersten Speicherbereich (5.1) ausgebildet ist.

22. Anordnung nach Anspruch 20 oder 21, **dadurch gekennzeichnet, dass** die Verarbeitungseinrichtung (3) zum Beenden des Schreibvorgangs in den ersten Speicherbereich (5.1) bei Feststellen des Abschlusses der Manipulation des ersten Speicherbereichs (5.1) durch die Überwachung des Überwachungsbereichs (5.2) ausgebildet ist.

23. Anordnung nach einem der Ansprüche 15 bis 22, **dadurch gekennzeichnet, dass** die Verarbeitungseinrichtung (3) zum Manipulieren wenigstens eines zweiten Speicherbereichs (5.3, 5.5, 5.7) ausgebildet ist.

24. Anordnung nach einem der Ansprüche 15 bis 23, **dadurch gekennzeichnet, dass** der Datenspeicher (5) ein Festkörperspeicher, insbesondere ein Flash-Speicher, ist.

25. Anordnung nach Anspruch 24, **dadurch gekennzeichnet, dass** der Datenspeicher (5) ein Flash-Speicher ist und der erste Speicherbereich (5.1) ein erster Sektor des Flash-Speichers ist.

26. Anordnung nach Anspruch 25, **dadurch gekennzeichnet, dass** der Überwachungsbereich (5.2) wenigstens ein Togglebit des ersten Sektors ist.

27. Anordnung nach einem der Ansprüche 15 bis 26, **dadurch gekennzeichnet, dass** die Verarbeitungseinrichtung (3) ein Prozessor mit einem Cache-Speicher als Zwischenspeicher (3.1) ist.

28. Anordnung nach einem der Ansprüche 15 bis 27, **dadurch gekennzeichnet, dass** die Verarbeitungseinrichtung (3) und/oder der Datenspeicher (5) eine Komponente einer Frankiermaschine (1) ist, insbesondere eine Komponente eines Sicherheitsmoduls (2) einer Frankiermaschine (1) ist.

29. Frankiermaschine mit einer Anordnung nach einem der Ansprüche 15 bis 28.
